# EUROPEAN PATENT APPLICATION

(11) **EP 1 367 792 A2**
(43) Date of publication of application: **03.12.2003**
(21) Application number: 03012540.5
(22) Date of filing: 02.06.2003
(51) Int. Cl.: H04L 27/26

(54) **DSL modem apparatus and reception method for DSL communication**

(30) Priority: 31.05.2002 JP 2002160495
(71) Applicant: Panasonic Communications Co., Ltd., Fukuoka-shi, Fukuoka 812-8531 (JP)
(72) Inventor: Noma, Nobuhiko, Yokohama-shi, Kanagawa 222-0033 (JP); Tomita, Keiichi, Yokohama-shi, Kanagawa 222-0032 (JP)
(74) Representative: Grünecker, Kinkeldey, Stockmair & Schwanhäusser Anwaltssozietät

(57) **Abstract**

A constellation encoder provides carrier data with a topology inverted at 180 degrees every 8 symbols to an IFFT unit to transmit the topology inversion signal to a line. Upon receiving the signal from the line during the transmission, an FFT unit performs a fast Fourier transformation on the signal in order to obtain constellation data. Then, an AGC controller performs an AGC on the data. Further, a CAPC unit performs a CAPC, and a timing regenerator monitors whether a timing regeneration is necessary. During a period of signal hybrid echo due to the carrier topology inversion transmission, processes of the AGC, CAPC and timing regeneration are frozen.

## Description

### BACKGROUND OF THE INVENTION

### 1. Field of the Invention

The present invention relates to a DSL modem apparatus and reception method for DSL communication that are applicable to multi-carrier communication employing a plurality of carriers.

### 2. Description of Related Art

The ADSL (Asymmetric Digital Subscriber Line) is a service that employs an existing telephone line so that both a high speed Internet connection service and ordinary telephone service can use the same line, which has rapidly become available in the recent years. For such ADSL services, ITU-T recommendations have been issued regarding ADSL modems. G.994.1 (hereafter referred to as G.hs) established in 1999 as SG15 of the ITU-T is one of the recommendations made for the ADSL standard.

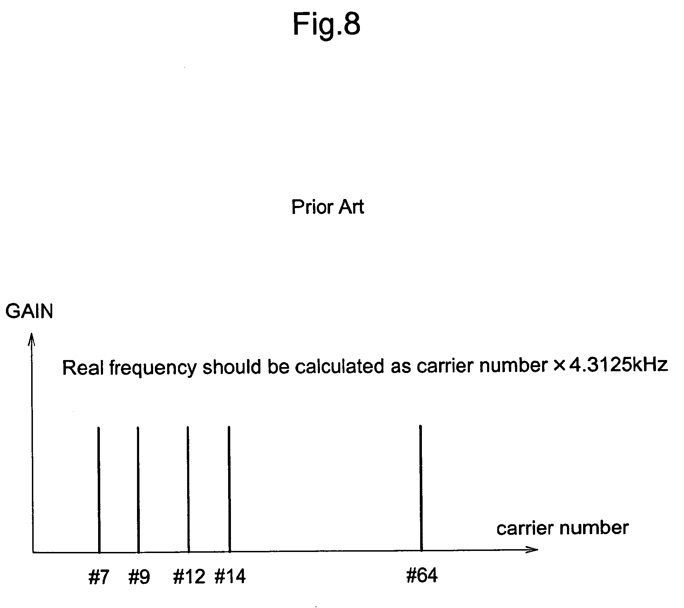

Hereafter, signals (carriers) used for G.hs are illustrated. Fig. 8 illustrates signals used at ANNEX.C, which assumes a co-residence with a TCM-ISDN. When a signal is transmitted from ATU-C (center apparatus, e.g., at an exchange side) to ATU-R (remote apparatus, e.g., at a house), which is referred to as a downstream, carriers #12, #14, and #64 are employed. When a signal is transmitted from ATU-R to ATU-C, which is referred to as an upstream, carriers #7 and #9 are used. *"#"* signifies a carrier number, a multiplication of which by 4.3125 kHz becomes a real carrier frequency.

In addition, as a modulation method, each carrier carries same data as described below. When data "1" is placed, a topology of each carrier is inverted at 180 degrees at every 8 symbols (8/4312.5 second). When data "0" is placed, topology inversion at every 8 symbols is not performed.

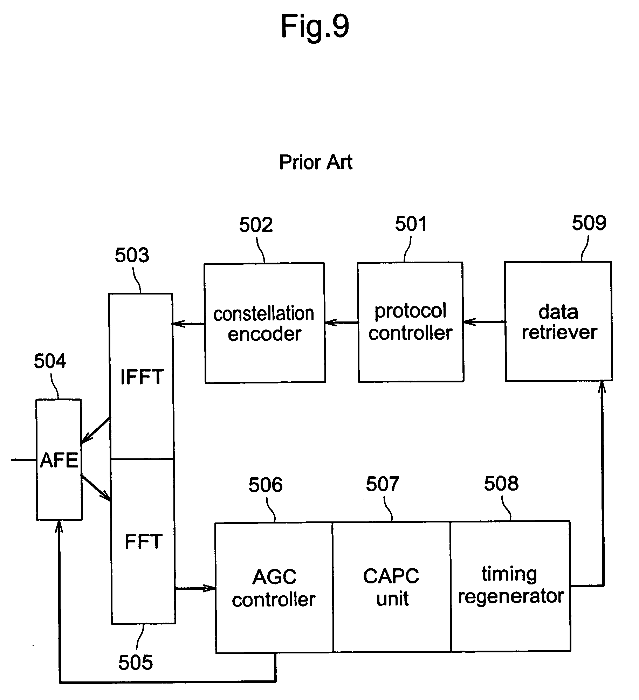

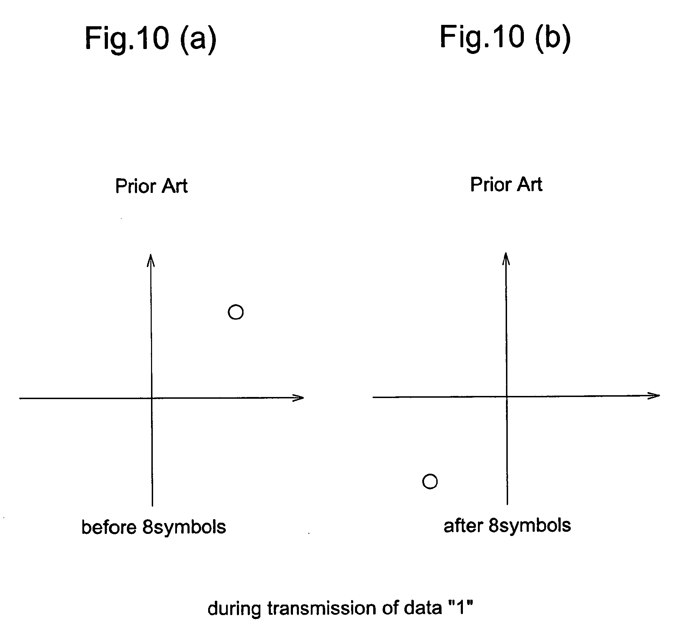

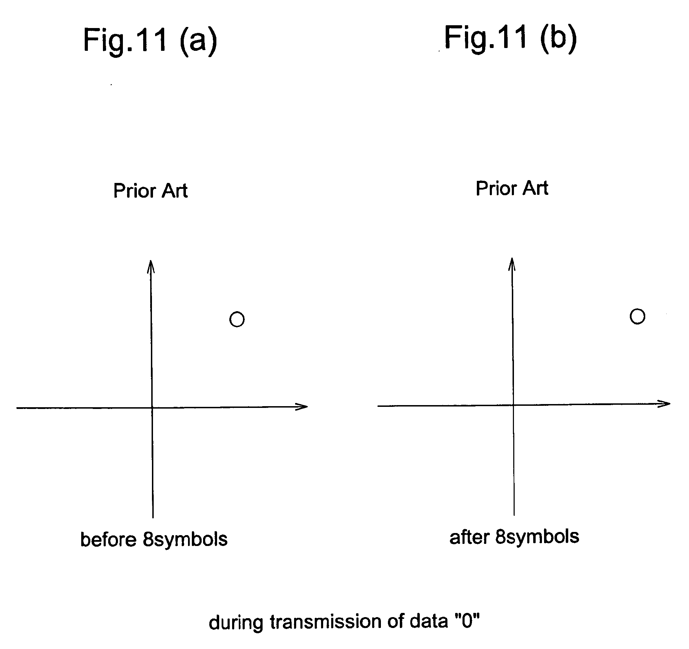

Fig. 9 is a functional block diagram illustrating transmission and reception sides of an ADSL modem. Protocol controller 501 prepares a message to be sent in accordance with G.hs regulated protocol, converting data into a bit string of having "0s and "1s" illustrating the message. Constellation encoder 502 calculates time for every 8 symbols, and constellation data is provided to IFFT unit 503 at the time interval of 8 symbols. For example, when transmitting "0", constellation data same as the previous 8 symbols is provided to IFFT unit 503. When transmitting "1", however, constellation data with a topology inverted at 180 degrees from the previous 8 symbols are provided to IFFT unit 503. Figs. 10 (a) and (b) illustrate constellation data for transmitting "1", whereas Figs. 11 (a) and (b) illustrate constellation data for transmitting "0".

The constellation data is modulated by IFFT unit 503, and the modulated transmission data is transmitted to the phone line after a DA conversion by AFE (analog front end) 4.

At the reception side, AFE 504 converts the received analog signal from the telephone line into sample data, and FFT unit 505 perform a fast Fourier transform per symbol unit on the sample data for demodulation. When FFT unit 505 outputs the data, AGC controller 506 calculates the gain control amount and gives an instruction to AFE 504 for the gain control amount.

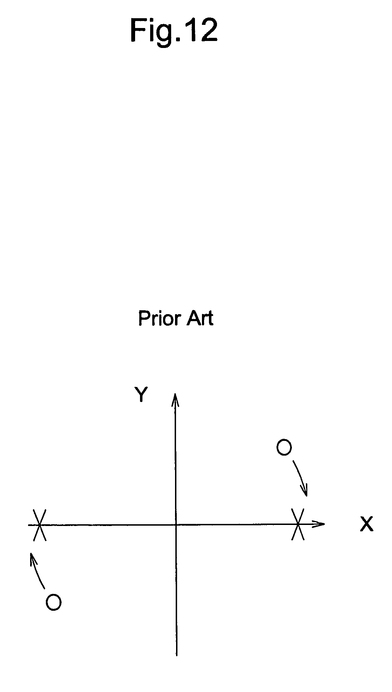

Fig. 12 illustrates constellation data obtained after the AGC (automatic gain control). Clear dots within Fig. 12 are the reception points. Since operation can be normally simplified when a reception point is adjusted to be on an axis of the constellation coordinates (complex plane), a CAPC (carrier automation phase control) is performed in order to adjust the degree of the reception point so that the point is on an axis of the constellation coordinates (complex plane).

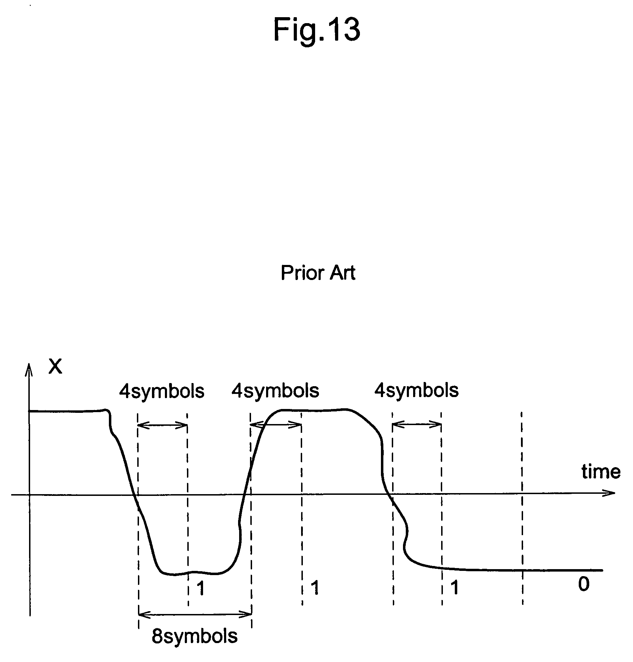

On X-axis of the constellation data after the CAPC, when signals mixed with "0" and "1" are received, detection signals are obtained as illustrated in Fig. 13. When a down edge is found from the detection signals, breakpoints for receiving G.hs reception is set per ever y 8 symbols. Data can be retrieved by determining whether the detection value is "positive" or "negative" at a point shifted 4 symbols to the right from the breakpoint. By giving "0" for the same sign as the previous sign and "1" for the opposite of the pr evious sign, data retriever 9 retrieves data in sequence.

Upon analyzing the detection signal and when the down edge location of the detection signal is different from the location expected from the previous value, it is necessary to update the 8-symbol breakpoint. Timing regenerator 8 monitors whether the down edge location is different from the location expected from the previous value, and readjusts the breakpoint by finding a new down edge from the detection signals, when necessary.

The above-described CAPC control and timing regeneration are continued in order to provide a stable demodulation operation.

However, when the ATU-C and ATU-R are far apart, there is a tendency that a stable demodulation operation is prevented because of an adverse effect on the reception due to a hybrid echo of the signal transmitted from the transmitting apparatus.

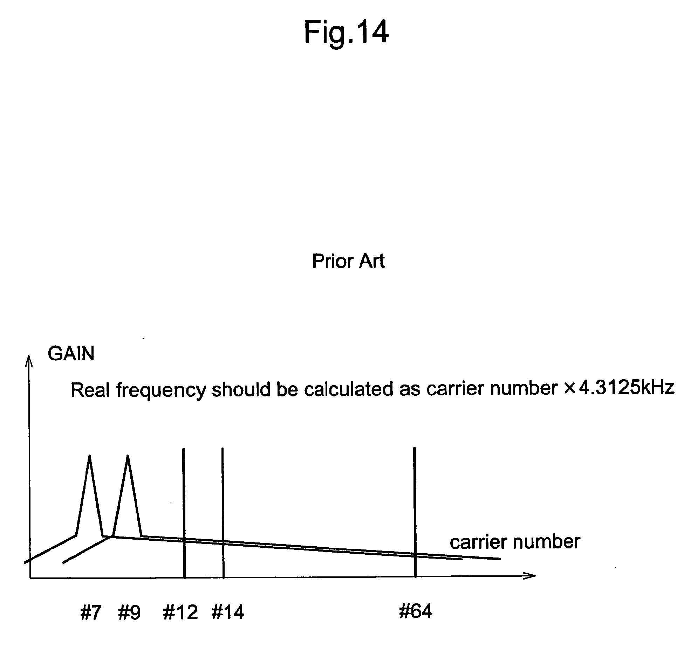

Fig. 14 illustrates a state where the ATU-R transmits carriers #7 and #9 on the uplink. As shown in Fig. 14, at the instant when data "1" that inverts the topology at 180 degrees is transmitted, spectrums of the signals transmitted on the uplink are diffused in wide frequency ranges. When the distance between the ATU-C and ATU-R are close (e.g., less than 3 km), it is possible to retrieve the carriers on the downlink since the signal levels of the carriers #12, #14, and #64 on the downlink are much higher than the diffusion from the uplink.

However, when the distance between the ATU-C and ATU-R is long, the signal levels of carriers #12, #14, and #64 on the downlink are largely attenuated, thereby preventing the detections of carriers #12, #14, and #64, since their signal levels are buried with the diffusion from the uplink. Because of this problem, it is difficult for the ATU-R to receive signals transmitted from the ATU-C.

### SUMMARY OF THE INVENTION

The present invention addresses the above-described problem. The purpose of the invention is to provide a highly reliable DSL modem apparatus and reception method for DSL communication that can secure a stable demodulation operation even where the ATU -C and ATU-R are far apart.

This invention prevents the adverse effect on the signal reception caused by the hybrid echo of the signal transmitted from the transmitting apparatus, and provides a stable demodulation operation. This is performed by freezing certain demodulation controls relating to AGC, CAPC, timing regeneration, data retrieval, etc., only for a predetermined period when the hybrid echo of the signal transmitted to a line from the transmitting apparatus has an adverse effect on the reception signals. The hybrid echo means the wraparound of the signal transmitted to a line from the transmitting apparatus.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 illustrates a configuration of a communication system according to an embodiment of the present invention;
Fig. 2 is a functional block diagram of a transceiver illustrated in Fig. 1;
Fig. 3 is a functional block diagram of a processor illustrated in Fig. 2;
Fig. 4 is a functional block diagram of AFE and AGC controllers illustrated in Fig. 3;
Fig. 5 illustrates an integration filter illustrated in Fig. 4;
Fig. 6 is a waveform diagram of a reception signal affected by a topology inversion transmission;
Fig. 7 is a flowchart relating to a freeze process according to the embodiment of the present invention;
Fig. 8 illustrates a signal employed by G.hs;
Fig. 9 is a functional block diagram of parts related to G.hs in a conventional ADSL modem;
Fig. 10 (a) illustrates a constellation before 8 symbols when data "1" is transmitted;
Fig. 10 (b) illustrates a constellation after 8 symbols when data "1" is transmitted;
Fig. 11 (a) illustrates a constellation before 8 symbols when data "0" is transmitted;
Fig. 11 (b) illustrates a constellation after 8 symbols when data "0" is transmitted;
Fig. 12 illustrates a principle of a CAPC process;
Fig. 13 is a reception waveform diagram when datum "0" and "1" are mixed;
Fig. 14 illustrates frequency characteristics of uplink and downlink ADSL communication at a short distance;

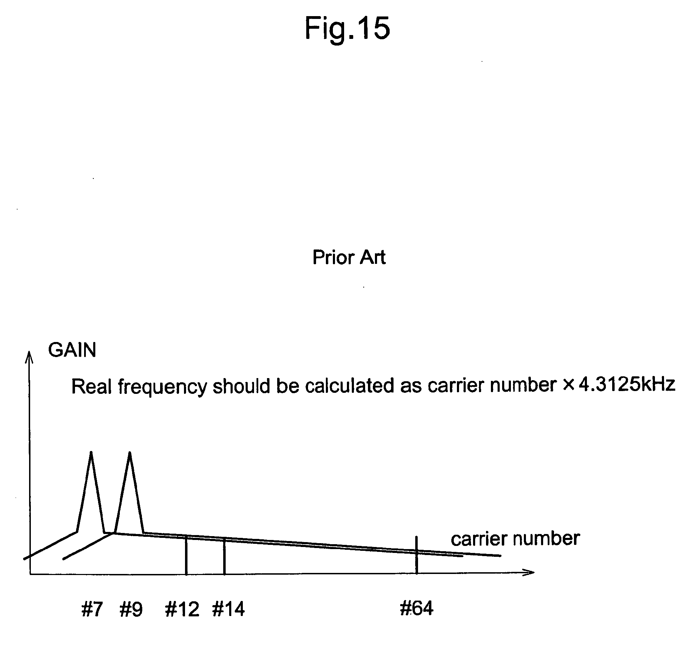

Fig. 15 illustrates frequency characteristics of uplink and downlink ADSL communication at a long distance.

### DETAILED DESCRIPTION OF PREFERRED EMBODIMENTS

The embodiments of the present invention are explained in the following, in reference to the above - described drawings.

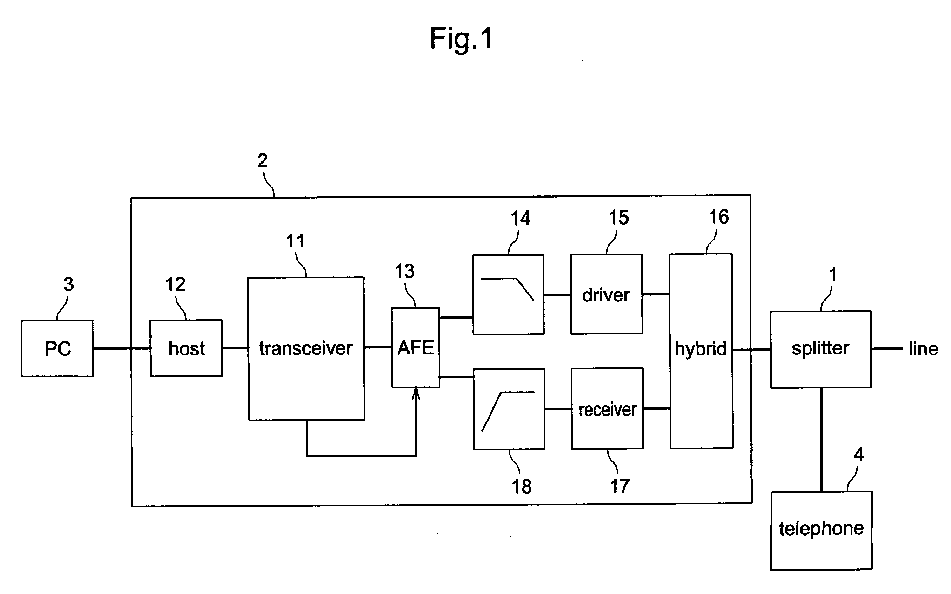

Fig. 1 illustrates a diagram of a communication system at the ATU-R side according to the present invention. In the communication system as illustrated in Fig. 1, a public phone line or a similar phone line (hereafter referred to as line) is connected to ADSL communication apparatus 2 via splitter 1. Further, communication terminal 3 is connected to ADSL communication apparatus 2. When communication terminal 3 and telephone 4 share one line, splitter 1 is necessary. However, when telephone 4 is not used, splitter 1 is not needed. It is also possible to have a configuration where communication terminal 3 internally installs ADSL communication apparatus 2.

ADSL communication apparatus 2 includes transceiver 11 that executes a handshake step in accordance with G.hs and various controls in accordance with the ADSL standards, and host 12 that controls entire operations including the one of transceiver 11. At the line side of transceiver 11, driver 15 is connected to a DA converter of AFE 13 via analog filter 14, so that analog signal amplified by driver 15 is transmitted to the line via hybrid 16. The analog signal transmitted from the line is received by receiver 17 via hybrid 16, and then input into an AD converter of AFE 13 via analog filter 18. When sampling data is output from the AD converter, AFE 13 outputs the data to transceiver 11.

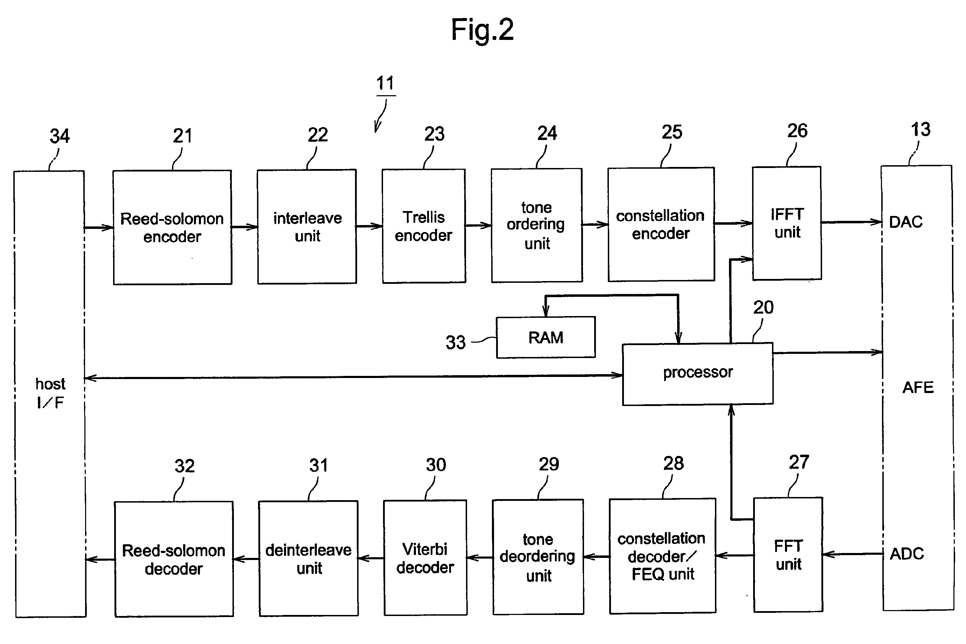

Fig. 2 is a functional block diagram illustrating transceiver 11. Processor 20 has a function to execute the handshake step and initialization step prior to initiating data communication (SHOWTIME). Processor 20 also executes a process where various processes relating to a later-described demodulation (e.g., AGC, CAPC, timing regeneration, data retrieval, and other processes) are frozen in accordance with a later -described algorithm, during a handshake step. In the present embodiment, AGC, CAPC, timing regeneration, data retrieval, and other processes are employed for the illustration of freezing operation for the demodulation. The all of the above-mentioned processes can be frozen, or specific processes having especially large effects can be selected for the freezing operation.

The transmission side of transceiver 11 includes Reed-Solomon encoder 21 that adds a redundancy bit for checking error, interleave unit 22 that sorts data to enable a burst error correction during Reed-Solomon decoding, Trellis encoder 23 that performs data convolution from a Trellis encoding, tone ord ering unit 24 that lays out a bit number for each carrier, constellation encoder 25 that converts transmission data into constellation coordinates (topology), and IFFT unit 26 that performs an Inverse Fast Fourier Transform (hereafter referred to as IFFT) on data after the constellation encoding process.

The reception process side of transceiver 11 includes FFT unit 27 that performs a Fast Fourier Transform (hereafter referred to as FFT) on sampling data of the received signal, constellation decoder/FEQ un it 28 that decodes data from constellation data of the FFT output signal and corrects a topology on the constellation coordinates, tone de-ordering unit 29 that restores data laid out to each carrier after tone ordering process at the transmission side, Vi terbi decoder 30 that performs Viterbi decoding on the received data, de-interleave unit 31 that restores data being resorted by the transmission side, and Reed-Solomon decoder 32 that deletes the redundancy bit added by the transmission side. Transceiver 11 is connected to host 12 via host interface (I/F) 34.

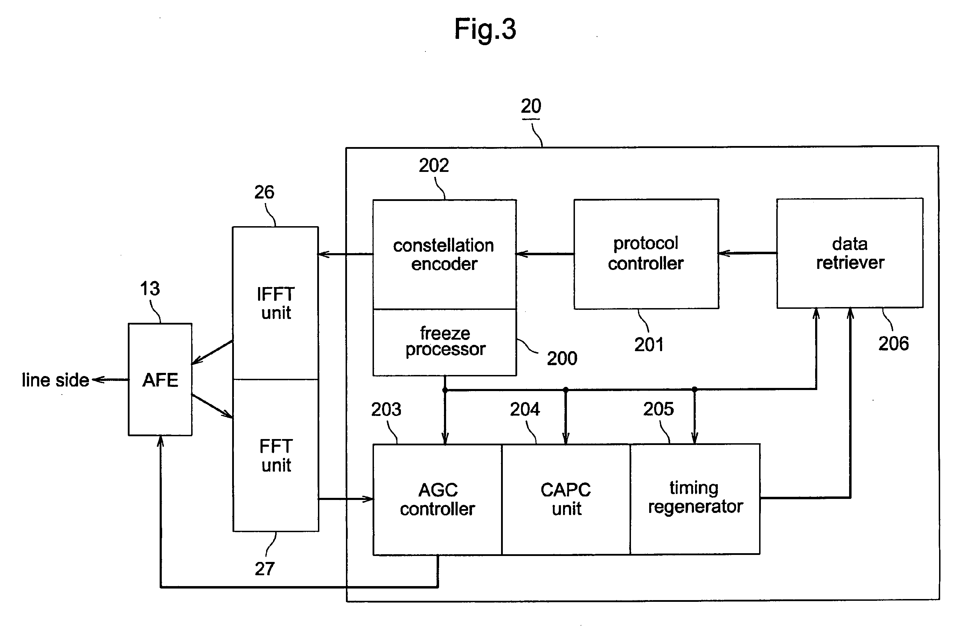

Fig. 3 is a functional block diagram of processor 20 at both transmission and reception sides, especially relating to functions to be frozen during the handshake step. Protocol controller 201 prepares a message to be sent in accordance with G.hs regulated protocol, converting data into a bit string of having "0s" and "1s" illustrating the message. Constellation encoder 202 calculates a time interval between every 8 symbols, and constellation data is provided to IFFT unit 26 at the time interval. For example, when transmitting "0", constellation data same as the previous 8 symbols is provided to IFFT unit 26. When transmitting "1", however, constellation data with a topology inverted at 180 degrees from the previous 8 symbols is provided to IFFT unit 26. Freeze processor 200 counts transmitted symbols from the beginning of the transmitted message or of the regenerated timing. When the counter reaches N, which is the timing to transmit data "1", freeze controller sends a freeze notification to AGC controller 203, CAPC unit 204, timing regenerator 205, and data retriever 206.

When sample data is output from AFE 13, the data is demodulated by FFT unit 27 that performs a fast Fourier transform per symbol unit. After the FFT output, AGC controller 203 calculates a gain control amount and gives the amount to AFE 13. There are two situations where AFE 13 performs a gain control on the transmitted analog signal at AFE 13, and on the received analog signal. By analyzing the FFT output, CAPC unit 204 adjusts the angle of the reception points so that they will be positioned on an axis of constellation coordinates. When the down edge location of the detection signal is different from the location expected from the previous value, timing regenerator 205 updates the 8 symbol breakpoint. Therefore, timing regenerator 205 monitors whether the down edge location of the detection signals is different from the location expected from the previous value, and readjusts the breakpoint by finding a new down edge from the detection signals, when necessary. Based on the reception breakpoint established by timing regenerator 205, data retriever 206 determines whether the detection value is "positive" or "negative" at a point shifted 4 symbols to the right from the breakpoint, in order to retrieve data. By giving "0" for the same sign as the previous sign and "1" for the opposite sign as the previous sign, data retriever 206 retrieves data in sequence.

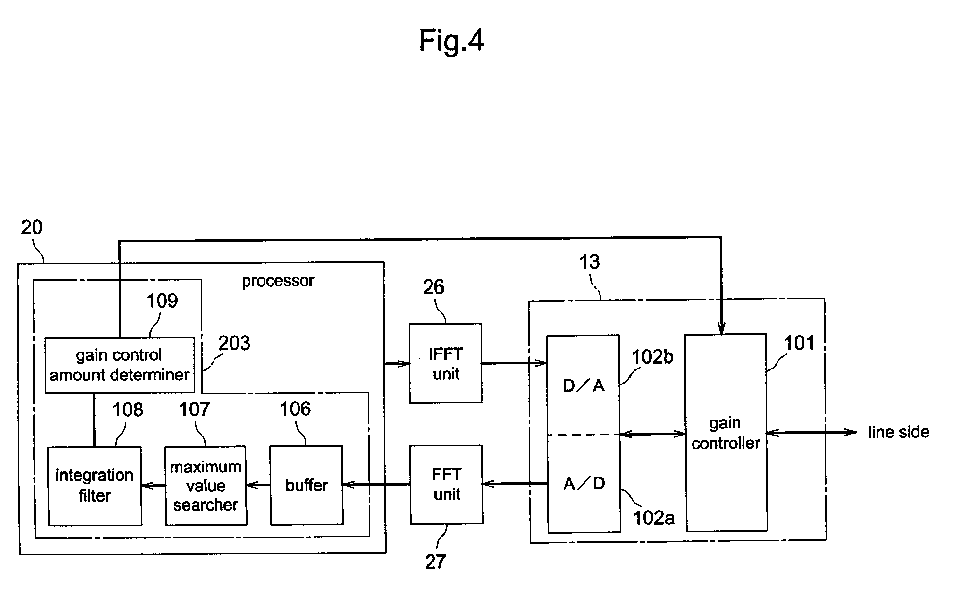

Fig. 4 illustrates configurations of AFE 13 and AGC controller 203. AFE 13 includes gain controller 101 that performs a gain control on a reception analog signal received from the line or a transmission analog signal output to the line, AD converter 102a that performs a sampling by synchronizing the received analog signal with a sampling clock, and DA converter 102b that converts the digital transmission analog signal into an analog signal. AGC controller 203 includes buffer 106 that stores the FFT output, maximum value retriever 107 that retrieves a maximum value from the FFT output (stored by buffer 106), integration filter 108 that performs a predetermined integral calculation on the maximum value retrieved by maximum value retriever 107, and gain control amount determiner 109 that determines the gain control amount by gain controller 101, from the output of integration filter 108.

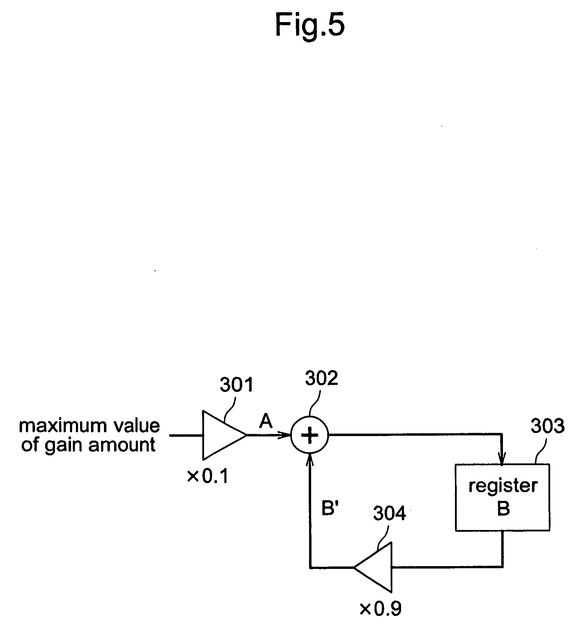

Fig. 5 is a block diagram illustrating a configuration of integration filter 108. Integration filter 108 multiplies the maximum carrier energy amount (retrieved by maximum value retriever 107) by 0.1 using multiplier 301, which is referred to as value A, and outputs value A to adder 302. Then, integration filer 108 multiplies value B (stored in inner register 303) by 0.9 using multiplier 304, which is referred to as value B', and outputs value B' to adder 302. Then, integration filter 108 uses adder 302 to add value A (input from multiplier 301) and value B' (input from multiplier 304), which is referred to as value B, and outputs value B to inner register 303. This value B is stored within inner register 303.

Since the above described predetermined integral calculation is performed on the maximum carrier energy amount that is retrieved by maximum retriever 107, even when the maximum carrier energy amount is suddenly decreased afterwards, it is possible to prevent a situation where value B is largely affected because of the lowered energy amount.

Hereafter, an illustration is given for a process that eliminates the effect on the downlink after the topology inversion transmission that inverts the topology at 180 degrees on the uplink. In this illustration the ATU-R is used; however, it is possible to achieve the same result at the ATU-C.

The 180 degree topology inversion for transmitting data "1" to uplink according to G.hs is performed at a maximum rate of 1 symbol per 8 symbols. Therefore, the downlink is affected by the topology inversion transmission at the maximum rate of once every 8 symbols. In addition, the timing is also limited to the number of symbols after the topology inversion transmission.

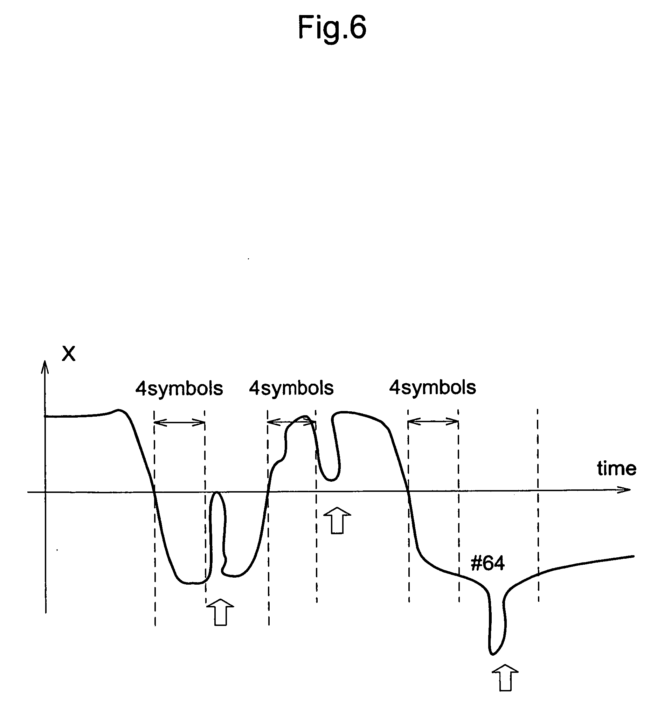

Fig. 6 illustrates a waveform of the plotted X-axis of the constellation after the CAPC process. As illustrated in the upward arrows in Fig. 6, hybrid echo interferences can be seen at points shifted about 4 symbols from each edge of a wave.

In the example shown in Fig. 6, the hybrid echo interference on the downlink appears at timing close to the 4th symbol after the ATU-R (transmitting terminal) performs the topology inversion transmission on the uplink. Since it depends on a system at which symbol the hybrid echo interference would appear after the topology inversion transmission, this embodiment uses N as the symbol. In real situation, it is desirable to fix constant N at the time of the product development/experiment. Additionally, the number of symbols to be frozen can be arbitrarily set as long as it does not have a substantial effect for the real demodulation.

Therefore, in the present embodiment, when the topology inversion transmission is performed, AGC, CAPC, and timing regeneration are frozen after N symbols are counted. When there is a need to retrieve data at this time, data at 1 previous symbol is given. This way, it is possible to eliminate the wraparound effect during the demodulation.

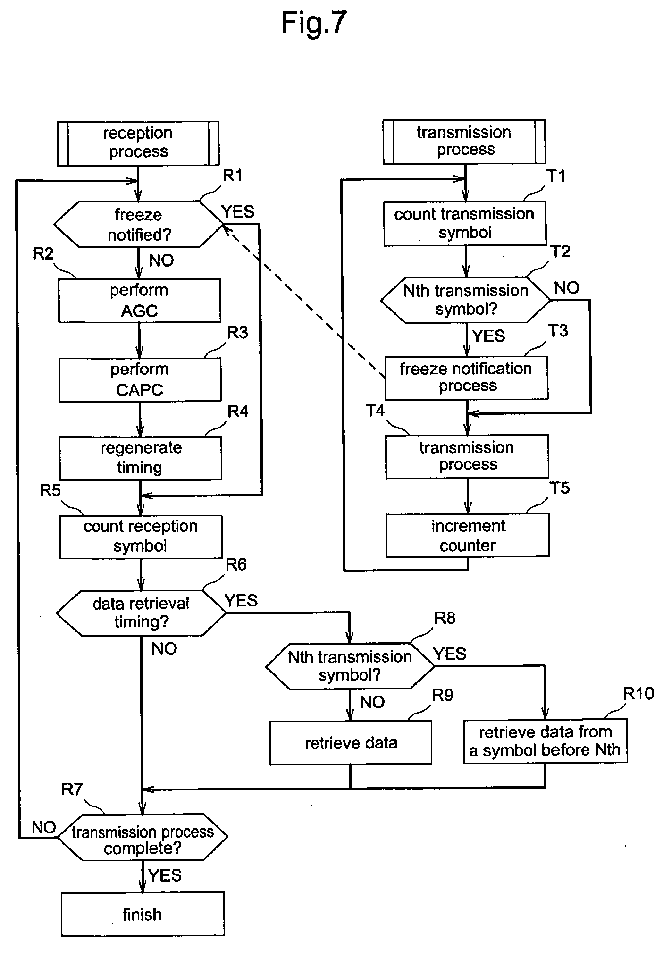

The following provides a specific illustration of the operation relating to the transmission and reception processes of a flowchart of Fig. 7, according to the embodiment.

As described above, protocol controller 210 prepares a transmitting message according to the protocol set by G.hs, and transmits the message to constellation encoder 202 by converting the transmission message into a bit string having "0s and "1s". Constellation encoder 202 counts time Tm for 8 symbols and provides IFFT unit 26 with the constellation data every Tm. The topology of the constellation data is generated according to "0" or "1" contained within the transmission message. When transmitting data "1", the topology transmitted before the previous 8 symbols is inverted at 180 degrees.

Freeze processor 200 increments the number count of transmission symbols every time constellation encoder 202 provides constellation data to IFFT unit 26 (step T1). Then, constellation data 202 performs the topology inversion transmission at a rate of 1 symbol per 8 symbols. By recognizing the symbol number at the topology inversion transmission, it is checked whether the transmission symbol number reaches N (step T2). Before the transmission symbol number reaches N, the freeze notification process to AGC controller 203 or the like is not performed (step T3), and symbol transmission process is performed (step T4). When 1 symbol is transmitted, the counter of the transmission symbol number is incremented (step T5), and the control moves to the next symbol transmission process.

When it is determined that the transmission symbol number reaches N at step T2, freeze processor 200 sends a freeze notification to AGC controller 203 or the like.

The reception process is also executed during the transmission process. The reception process constantly monitors whether the transmission process has issued a freeze notification (step R1). When there is no freeze notification, AGC controller 203 performs a later - described gain control (step R2). Further, CAPC unit 204 performs a CAPC process on the constellation data (step R3). Timing regenerator 205 also monitors the need for timing regeneration. When there is a timing deviation greater than a predetermined value, a new breakpoint (timing) is reestablished in order to group 8 symbols (step R4).

The following provides an illustration of the AGC as an example of the demodulation related process. AGC controller 203 performs a gain control by utilizing the frequency characteristics of REVERB signals that are transmitted in accordance with ITU-T recommended G.992.1 (G.DMT) or G.992.2 (G.lite).

G.992.1 sets an initialization sequence in which the ATU-C and ATU-R exchanges REVERB signals (C, R -REVERB1-3) three times.

Upon transmitting the third REVERB signal (C - REVERB3), ATU-C transmits a SEGUE signal (C-SEGUE1) indicating that subsequent data follows. Then, ATU-C transmits C-RATES 1 that sets the transmission speed and C-MSG1 that sets additive information such as noise margin. Further, the ATU-C transits a C-MEDLEY that sets a transmission speed and bit number of data to be placed with each carrier (multi-carrier).

Since an important control signal transmission follows immediately after the third REVERB signal, it is preferable to complete the gain control before the third REVERB signal. In this embodiment, the gain control is performed when the first REVERB signal (C-REVERB1) is received, so as to perform the gain control to REVERB signals that appear after C-REVERB1 (first exchanged REVERB signal).

A REVERB signal has frequency characteristics of a plurality of carriers having the same energy amount signals in a frequency sequence of 4.3125kHz up to 1,104kHz. However, even when all carriers are transmitted with the gain control in order to have a constant energy amount at the transmission side, each carrier energy amount received at the reception side can become attenuated because of factors such as line conditions.

In the present embodiment, the above-described frequency characteristics of the REVERB signal are employed to appropriately perform a gain control for communication using a multi-carrier method.

In other words, when REVERB signals are being received at the ATU-R, an FFT output of the received REVERB signals is stored in buffer 106. In particular, when FFT unit 27 performs an FFT on 1 symbol data, signal values of all carriers can be obtained as a form of constellation for each carrier (as coordinate values in complex plane coordinates) in one operation. Accordingly, carrier signal value (energy value) for each symbol is shown as 1 coordinate point on the R-I (Real-Imaginary) plane, and such (R, I) coordinates corresponding to each carrier are stored in buffer 106.

When (R, I) coordinate information corresponding to the sampling data for each symbol is stored in buffer 106, maximum value retriever 107 retrieves a carrier energy amount having the maximum value, based on the (R, I) coordinates, among energy amounts for multiple carriers within a REVERB signal. The distance from the origin point to (R, I) coordinates for each samp ling data on the R-I planes are equivalent to the energy amount for each carrier. Therefore, by comparing the distance from the origin point to (R, I) coordinates for each sampling data, maximum value retriever 107 can retrieve the carrier energy amount having the maximum value.

Integration filter 108 performs a predetermined integration calculation on the carrier energy amount of the maximum value, which is retrieved by maximum value retriever 107. Gain control indicator 109 compares value B (obtained from the integral calculation) with the target range. When value B is greater than the upper limit value of the target range, a gain control is instructed for gain controller 101 to decrease the energy amount of the received analog signal. For example, all carrier energy amounts from the future input signals are decreased by 1db. Conversely, when value B is smaller than the lower limit value of the target range, gain control is instructed for gain controller 101 to raise the energy amount of the receiving analog signals (e.g., raising all carrier energy amounts from the future input signals by 1db). In addition, when value B is within the target range, no gain control is instructed.

With the above-described gain control, it is possible to perform a gain control according to the signal degradation, which is cause by line conditions or the like, and securely avoid a situation where some carriers overflow. Therefore, even when multi-carriers are used for communication, it is possible to appropriately perform a gain control so as to prevent an overflow.

As described above, steps R2, 3, and 4 are performed upon every symbol reception during the reception process. By counting reception symbols (step R5), whether it is time for a data retrieval is determined (step R6) . In this example, a data retrieval timing is set at every 4th reception symbol from the breakpoint of 8 reception symbols. When it is determined not to be the timing for a data retrieval at step R6, it is confirmed that the transmission process has not completed (step R7). Then, the control returns to step R1.

When a freeze notification is detected at step R1, processes for the AGC, CAPC, and timing regeneration are stopped. In particular, steps R2-4 are skipped and the control moves from step R1 to R5 to increment the count number for the reception symbols. When it is the timing for a data retrieval (step R6), the control moves to step R8. When it is not the timing for a data retrieval, the control moves to step R7.

Accordingly, although the arrowed effects of Fig. 6 appear at the Nth symbol after performing a topology inversion transmission, the AGC, CAPC, and timing regeneration processes are stopped by the freeze notification, thereby preventing the demodulation of data affected by the topology inversion transmission.

When it is determined to be the data retrieval timing at step R6, it is checked whether the current data retrieval timing is at the Nth symbol after the topology inversion transmission (step R8). When it is not at the Nth symbol after the topology inversion transmission, the control moves to step R9 where data retrieval is performed, since the reception data is not affected by the topology inversion transmission. However, when the current data retrieval timing is at the Nth symbol after the topology inversion transmission, the control moves to step R10 where the retrieval data of 1 previous symbol is used as the current retrieval data.

Accordingly, when the reception data is affected by the topology inversion transmission, the reception data is replaced with an unaffected proximity data for demodulation.

In the above illustration, N symbol is used as a parameter necessary for the freeze process, in order to eliminate the need for repetitively specifying the hybrid echo period caused by the transmission signals, thereby simplifying the system design. However, this invention is not limited to the method of setting an N symbol to control freeze timing, but can be applied to other methods as long as hybrid echo generated periods can be specified.

In the above embodiment, illustrations are given in a premise of communications in accordance with ADSL standard protocols (especially, G.hs). However, this invention can be applied to other protocols when similar problems need to be addressed.

Additionally, it is especially useful to perform the above-described freezing control during the handshake step in accordance with G.hs, since it is possible to predict the effects of topology inversion transmission and freezing about 1 symbol period does not have much effect. However, this invention also have a configuration where the above-described freezing process is appropriately performed in order to eliminate the effects of the topology inversion transmission as an arbitral process after performing the handshake step of G.hs.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amende d, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above-described embodiments, and various variations and modifications may be possible without departing from the scope of the present invention.

This application is based on the Japanese Patent Application No. 2002-160495 filed on May 31, 2002, entire content of which is expressly incorporated by reference herein.

## Claims

1. A DSL modem apparatus comprising:
a transmitter that transmits a transmission signal to a line, the transmission signal comprising a predetermined number of symbols;
a receiver that performs a demodulation on the transmission signal received from the line for every symbol of the predetermined number, during a transmission of said transmitter, and outputs a demodulated signal;
a retriever that retrieves data from the demodulated signal; and
a freeze processor that freezes the demodulation during a period in which a hybrid echo of the transmission signal is generated.

2. The DSL modem apparatus according to claim 1, wherein said freeze processor freezes the demodulation after counting a predetermined number of symbols from a carrier topology inversion.

3. The DSL modem apparatus according to claim 1, wherein said receiver comprises an AGC controller that performs an AGC on a subsequent reception signal based on a constellation data of the received signal, and wherein said freeze processor freezes the AGC of said AGC controller, the AGC being performed as a demodulation.

4. The DSL modem apparatus according to claim 1, wherein said receiver comprises a CAPC unit that performs a CAPC on a constellation data of the received signal, and wherein said freeze processor freezes the CAPC of said CAPC unit, the CAPC being performed as a demodulation.

5. The DSL modem apparatus according to claim 1, wherein said receiver comprises a timing rege nerator that predicts a symbol breakpoint to be used for a current data retrieval, the symbol breakpoint being predicted from a symbol breakpoint used for a previous data retrieval, and regenerates timing for a symbol breakpoint when the current symbol breakpoint is deviated from a prediction, and wherein said freeze processor freezes timing regeneration of said timing regenerator, the timing regeneration being performed as a demodulation.

6. The DSL modem apparatus according to claim 1, wherein said data retriever replaces retrieving data with retrieved data of at least one previous symbol, when the retrieving data is transmitted during the period in which the hybrid echo is generated.

7. A DSL communication apparatus comprising:
a transceiver that performs a handshake step and an initialization step prior to initiating data communication, and encodes transmission data and modulates reception data after the data communication;
a host that manages an operation of said transceiver, inputs transmission data provided from a user terminal to said transceiver, receives reception data received from said transceiver via a line, and outputs the reception data to the user terminal;
an AFE unit that converts transmission data into an analog signal, the transmission data being output to the line by said transceiver, and converts the analog signal received from the line into digital data;
a driver that transmits the analog signal converted by said AFE unit to the line; and
a receiver that receives the analog signal from the line,
wherein said receiver installs the DSL modem apparatus according to claim 1.

8. A reception method for DSL communication comprising:
transmitting a transmission signal to a line, the transmission signal comprising a predetermined number of symbols;
demodulating the transmission signal received from the line for every symbol of the predetermined number during the transmission; and
freezing the demodulation during a period in which a hybrid echo of the transmission signal is generated.

9. A reception method for G.hs communication comprising:
specifying a signal received during a period in which a hybrid echo of a transmission signal from a transmitting terminal is generated, upon performing a carrier topology inversion for data "1" transm ission from the transmitting terminal, when a handshake step based on ITU-T recommended G.994.1 (G.hs) is executed; and
freezing a demodulation for the specified signal.
